# EUROPEAN PATENT SPECIFICATION

(11) **EP 1 248 537 B1**
(45) Date of publication and mention of the grant of the patent: **05.04.2006**
(21) Application number: 01901017.2
(22) Date of filing: 08.01.2001
(51) Int. Cl.: A23L 3/365, B65B 25/00, B65B 29/00

(54) **PROCESS AND APPARATUS FOR PREPARING MEALS**
VERFAHREN UND VORRICHTUNG ZUR HERSTELLUNG VON SPEISEN
PROCEDE ET APPAREIL DESTINES A PREPARER DES REPAS

(30) Priority: 07.01.2000 AU 1002500
(43) Date of publication of application: 16.10.2002
(73) Proprietor: Allied Chefs Pty Limited, Merrylands, New South Wales 2160 (AU)
(72) Inventor: TASSES, Paul, Merrylands, New South Wales 2160 (AU)
(74) Representative: Bardini, Marco Luigi
(86) International application number: PCT/AU2001/000014
(87) International publication number: WO 2001/049135

(56) References cited:
- WO-A-99/23013
- GB-A- 2 280 352
- GB-A- 2 333 222
- JP-A- 11 278 552
- US-A- 4 328 254
- US-A- 4 452 823

## Description

The present invention relates to a process for providing meals of the kind required to meet the demand of home meal replacement, and to a carrier tray that carries the meal whilst frozen and that is adapted for easy and faithful transfer of the meal to a like shaped serving dish where the look of the meal as prepared on the carrier tray is maintained.

More particularly, the present invention relates to a process for providing a home meal replacement defined as one or more meals having the look of a freshly prepared gourmet meal of restaurant quality when presented to the consumer but which are firstly prepared with the same look on carrier trays and then frozen at first locations, such as meal assembly plants, prior to delivery to second locations, such as the consumer's home, where the frozen meals are transferred from their carrier trays to like shaped serving dishes whilst maintaining the same look of the meals and then are heated or thawed to edible temperature for consumption. The process has particular application to home delivery of gourmet style meals to couples or other small gatherings of people and the delivery of gourmet style meals to passengers on aircraft or to other large gatherings of people, all of whom desire to be provided with a gourmet meal having the look of a freshly prepared restaurant meal presented on formal crockery, although it is to be understood that the invention is not limited thereto in its application.

### BACKGROUND ART

Home delivery of cooked meals from fast food restaurants or the like has traditionally required foil or paper based/cardboard containers for carrying the meals to be delivered to the consumer. These meals, such as lasagne in foil containers or chicken and vegetables in cardboard containers, are usually delivered at edible temperature and are consumed either directly from their container or transferred onto appropriate crockery for consumption. In neither of these circumstances, however, does the meal as presented to the consumer have the look of a restaurant meal. Even where the meal is transferred onto a crockery dish, the meal will not readily maintain its look and will require special and time consuming attention during transfer and placement onto the crockery dish to ensure that it does not lose its shape, texture and other appearance characteristics as may be desired by the consumer to simulate a restaurant meal. In many cases, no amount of careful attention will enable the meal to look like a freshly prepared gourmet meal of restaurant quality.

Various methods for the preservation and serving of frozen foods or meals are described in e.g., GB 2 280 352; US 4 452 823; US 4 328 254; and JP 11-278 552.

Hitherto, precooked frozen meals may be purchased from supermarkets or the like and are heated to edible temperature in either their carrying containers or appropriate crockery onto which they have been transferred. Like home delivered cooked meals, precooked frozen meals presented to the consumer in this manner do not have the look of a freshly prepared gourmet meal of restaurant quality. The precooked frozen meal, heated to edible temperature on a crockery dish, will, by virtue of its packaging in a carrying container that is of unlike shape to that of the crockery dish, not assume the look of a freshly prepared gourmet meal of restaurant quality unless, of course, careful and time consuming attention is paid to its transfer and placement onto the crockery dish. Precooked frozen lasagne, for instance, is packaged snugly in a box-like container and must, if a person wishes to present it as a home meal replacement to guests, be very carefully removed therefrom for transfer onto a crockery dish of normally oval or circular shape, at all times avoiding distorting the shape or interfering with the texture of the lasagne. If so transferred onto a crockery dish, the lasagne may nonetheless sag if it had required the support of the box-like container to maintain its upright shape and overall appearance.

Furthermore, it has hitherto been impossible to reliably visualize the look or appearance of a meal to be served to consumers on crockery from meals that are home delivered at edible temperature or precooked frozen meals. Nor has it been hitherto possible to present to the consumer a home delivered or precooked frozen meal having the look of a freshly prepared gourmet meal of restaurant quality in a manner that is quick, easy and reliable. Still further, composite or multiple course meals may be provided by the present invention of, say, lasagne or soup as an entree course meal, filet mignon with vegetable accompaniment as a main course meal, and strawberry Romanoff as a dessert course meal, each of which course meal is provided in accordance with the process of the present invention and has the desired look as described hereinbefore.

In the application of the process of the present invention to large gatherings of people, the preparation of a bulk quantity of meals as a home meal replacement, being conventionally done by presenting a large quantity of meals in universal serving dishes, is no longer a time consuming, high level handling operation that occasionally exposes the meals to risk of bacterial and other contamination prior to serving.

It is an object of the present invention to provide a process for providing a home meal replacement as hereinbefore defined that is quick, easy, reliable and utilizes a carrier tray of a size and shape that corresponds substantially to that of a serving dish onto which the meal carried in the carrier tray is to be transferred.

### SUMMARY OF THE INVENTION

According to the invention, there is provided a process for providing a home meal replacement as herein defined, comprising:
(i) providing a carrier tray for each meal of the home meal replacement to be served,
(ii) introducing the meal into each carrier tray and subjecting the meal to conditions that inhibit microorganism growth and contamination of the meal, the meal consisting of one or more foods that are introduced into each carrier tray at desired positions to simulate a gourmet meal,
(iii) freezing the meal in each carrier tray to a temperature that enables the meal to be cold stored until the meal is ready to be served,
(iv) providing a serving dish for each carrier tray wherein the serving dish is of a size and shape that corresponds substantially to that of the carrier tray,
(v) manipulating each carrier tray in such a way that the frozen meal therein is transferred into its respective serving dish, the meal being presented in its respective serving dish such that the one or more foods are located in the same relative positions as in the respective carrier tray, and
(iv) heating or thawing the meal in each serving dish to edible temperature for serving and consumption.

Preferably, the carrier tray is fabricated of a flexible plastic.

### BRIEF DESCRIPTION OF THE DRAWINGS

In order that the invention may be readily understood and put into practical effect, reference will now be made to the following drawings, in which:
Fig 1 is a flow chart showing the steps of a preferred embodiment of the process of the present invention, and

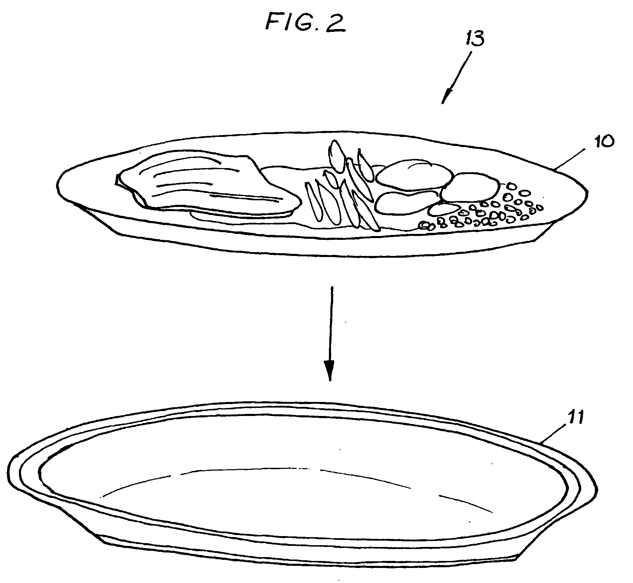

Fig 2 is a perspective view of a preferred carrier tray with its frozen meal and its correspondingly sized and shaped serving dish, used according to the process of the present invention.

### DETAILED DESCRIPTION OF THE INVENTION

A carrier tray 10, fabricated of a flexible plastic, such as a polyethylene terephthalate (PET) which is recyclable, is provided 12 having a size and shape that matches or corresponds to that of a conventional or formal ceramic serving plate 11, and passes along a processing line in a meal assembly plant where various foods comprising the meal 13, in this case consisting of filet mignon and vegetable accompaniment, are introduced 14 into the tray at the desired positions to give the meal the desired look of a gourmet meal. Cooked food must be maintained at all times before and during this operation at above 60° C to comply with health requirements.

When the introduction of food into the tray has been completed, the tray, with its assembled meal, is subject to the following chilling and freezing operation 16. The tray quickly passes through a nitrogen tunnel at -130° C where the meal therein is snap chilled to no more than 5° C to deactivate bacteria and other microorganisms, and the tray is then exposed to a batch blast freezer which freezes the meal to a range of between -18° C and -28° C to enable cold storage of the meal. Alternatively, the nitrogen tunnel may, in addition to snap chilling the meal, be used to bring the temperature of the meal to the range of between -18° C and -28° C. The duration of the chilling operation in the nitrogen tunnel need not be longer than about 7 minutes to fully deactivate the microorganisms. A spiral freezer may be used as an alternative to the nitrogen tunnel.

After freezing, the carrier trays are packed 18 into cartons or other storage assembly in a temperature controlled packaging room maintained at between about 8° C and 14° C and then palletized in the same room before being transferred into a storage freezer operating at between -18° C and -28° C. When required, they are transported 18 by refrigerated transport to wholesalers or other points of sale. Subsequent storage of the suitably packed tray with its frozen meal in the wholesaler's freezer is necessary before it is ordered by a consumer and utilized in presenting a home meal replacement.

Prior to consumption, for some meals the tray is inclined or tilted by the person presenting the meal over the serving plate 11 of like size and shape to the carrier tray 10, which serving plate may be fabricated of a ceramic material commonly used in crockery, and the tray is so pressed that the frozen meal is eased out of the tray, either with or without the aid of the second hand, and transferred 20 into the serving plate. For other meals, the tray is held upright whilst the frozen meal is eased out of the tray by gentle finger pressure and bending of the flexible plastic walls of the tray. The flexible plastic used in the fabrication of the carrier tray allows a person to press or squeeze gently or otherwise tease the frozen meal out of the tray with no substantial disruption to the meal, thus preserving the desired look of the meal in the serving plate. The frozen meal in the ceramic serving plate may then be heated, or allowed to thaw sufficiently before being heated, in a microwave oven where it is heated 22 to edible or serving temperature before presentation to the consumer for consumption. In the case where the meal is a dessert course meal, such as a strawberry Romanoff, or a between course meal, such as a sorbet, intended to be consumed chilled, the frozen meal in the serving plate is allowed to thaw to a chilled serving temperature in controlled conditions before presentation to the consumer for consumption.

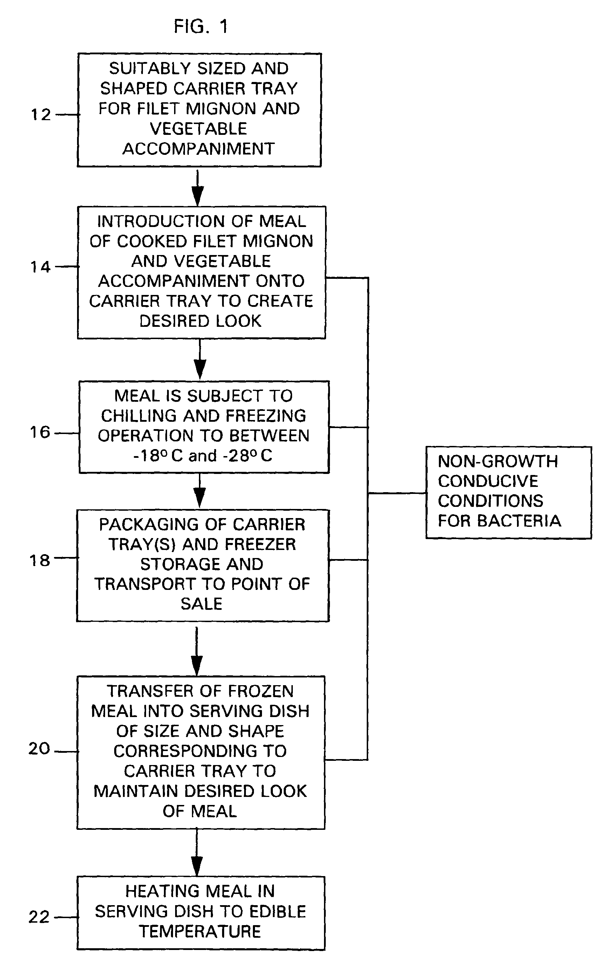

The kind of serving dish useful in the present invention will depend on the type of meal to be provided, which may be or include anything in the nature of a entree course meal, such as a lasagne requiring a small sized and oval shaped serving plate or a soup requiring a circular serving bowl, a main course meal, such as the meal provided according to Fig 1 in a ceramic serving plate of, say, large size and circular shape, and a dessert course meal, such as a strawberry Romanoff requiring a champagne style serving glass. Therefore, the scope of the term "serving dish" in the present application, and hence the nature of the correspondingly shaped carrier tray, is not to be taken to comprise only conventional ceramic serving plates. Rather, the term "serving dish" may also include serving bowls for soup and serving glasses for ice desserts and sorbets, and any other serving device used for presenting the meal to a consumer.

The serving dish or dishes, having a like size and shape to that of the carrier trays, are supplied to the person presenting the meal, who may be the only consumer of the meal or one of the consumers of more than one meal, such as when the person is hosting a dinner party and desires a home meal replacement to serve the guests to the party. In that instance, the serving dishes may be supplied prior to, or concurrently with, the arrival of the frozen meals in the carrier trays from the point of sale, depending on what arrangement is made between the person hosting the dinner party and the supplier of the serving dishes.

The carrier tray is manufactured according to a size and shape that corresponds to the serving dish into which the meal is to be transferred. A die for the carrier tray is first manufactured to suit the intended meal for the carrier tray. The serving dish for the intended meal should, when manufactured, be of corresponding size and shape to the carrier tray made by the die. The carrier tray, and thus its die, may be ribbed, contoured, or have other structural features that provide the carrier tray with an aesthetically pleasing appearance or contribute to improved function, say, by reinforcing its strength and rigidity or by making it easier or safer to hold or otherwise manipulate for transferring the frozen meal into the serving dish. The carrier tray can be manufactured in large quantities from its die and utilized in a processing line where the meal is systematically introduced, chilled and frozen as described above.

The carrier tray may be returned to the manufacturer after its contents have been released therefrom for recycling of the plastic used in its fabrication or for sterilization which enables it to be reused.

The flexible and other structural properties of the plastic must withstand the temperature conditions it will experience during the freezing operation so as to ensure viability of the tray structure and its ability to be manipulated for releasing the meal from the tray into the serving dish.

The carrier tray may additionally be stackable with like carrier trays.

It is an advantage of the present invention that the position of, say, the various foods of the meal relative to the carrier tray is the same as the position of the various foods relative to the respective serving dish into which the meal has been transferred, so that a consumer may be presented with a meal for consumption as faithfully and reliably as was intended by the chef who originally presented the meal in the carrier tray.

It is apparent that the present invention will enable a person who is not skilled in cooking to present a complete gourmet style meal to the consumer in the shape, size and presentation as intended by the chef by the simple and easy steps of transferring the frozen meal from the carrier tray to the serving dish and then heating the meal to edible temperature.

At the present time, precooked frozen meals are assembled by manufacturers in disposable trays of foil, ovenable paper or plastic and sold as TV dinner style meals to the consumer. The consumer heats the meal as per instructions and may eat it out of the TV dinner style carrier tray or, in some cases, may combine a number of precooked frozen meals to assemble on a dish a meal that includes a variety of meat, vegetables or pasta and other accompaniments. The only original features of such meals that reach the consumer using these prior art methods are quantity and taste. Shape, size and presentation cannot be controlled when placing such a prepared meal on a dish. The dish, being of a different size, shape or style to the TV dinner style carrier tray, will not prevent the heated food distorting or otherwise looking differently from its original shape, size and presentation when placed on the serving dish, whereas the serving dish used in the process of the present invention has a like size and shape to the carrier tray.

This invention ensures that the consumer will receive a meal of the highest restaurant quality presentation and the person presenting the meal will have the confidence of a cordon bleu chef when serving it to any number of people. All variables that allow for the distortion of a preprepared meal are eliminated, and the final presentation is as the chef intended the meal to be served.

## Claims

1. A process for providing a home meal replacement as herein defined, comprising:
(i) providing a carrier tray for each meal of the home meal replacement to be served,
(ii) introducing the meal into each carrier tray and subjecting the meal to conditions that inhibit microorganism growth and contamination of the meal, the meal consisting of one or more foods that are introduced into each carrier tray at desired positions to simulate a gourmet meal,
(iii) freezing the meal in each carrier tray to a temperature that enables the meal to be cold stored until the meal is ready to be served,
(iv) providing a serving dish for each carrier tray wherein the serving dish is of a size and shape that corresponds substantially to that of the carrier tray,
(v) manipulating each carrier tray in such a way that the frozen meal therein is transferred into its respective serving dish, the meal being presented in its respective serving dish such that the one or more foods are located in the same relative positions as in the respective carrier tray, and
(vi) heating or thawing the meal in each serving dish to edible temperature for serving and consumption.

2. The process according to claim 1 wherein the the carrier tray is fabricated of a flexible plastic.
Dated this 8th day of January 2001
**Allied Chefs Pty Limited**
Patent Attorneys for the Applicant
PETER MAXWELL & ASSOCIATES

## Patentansprüche

1. Verfahren zum Bereitstellen von "Home Meal Replacement" (Ersatz für zu Hause zubereitete Speisen), wie hierin definiert ist, enthaltend:
(i) Bereitstellen eines Trägerfaches für jede Speise des zu servierenden Home Meal Replacement's,
(ii) Einbringen der Speise in jedes Trägerfach und Behandeln der Speise mit Gegebenheiten, die Wachstum von Mikroorganismen und Kontamination der Speise verhindern, welche Speise aus einem oder mehreren Nahrungsmittel(n) besteht, das/die in jedes Trägerfach an gewünschter/-n Position(en) eingebracht wurde(n), um eine Gourmetspeise zu simulieren,
(iii) Gefrieren der Speise in jedem Trägerfach auf eine Temperatur, die es der Speise ermöglicht, kalt gelagert zu werden, bis die Speise zum Servieren ansteht,
(iv) Bereitstellen einer Servierschale für jedes Trägerfach, wobei die Servierschale von einer Größe und Form ist, die im wesentlichen jener des Trägerfaches entspricht,
(v) Handhaben jedes Trägerfaches in einer solchen Weise, dass die gefrorene Speise darin in ihre jeweilige Servierschale umgesetzt wird, welche Speise in ihrer jeweiligen Servierschale so dargeboten wird, dass das eine oder die mehreren Nahrungsmittel in derselben/denselben relativen Position(en) wie in dem jeweiligen Trägerfach angeordnet ist/sind, und
(vi) Erwärmen oder Auftauen der Speise in jeder Servierschale auf eine Esstemperatur zum Servieren und Verzehr.

2. Verfahren nach Anspruch 1, wobei das Trägerfach aus einem flexiblen Kunststoff hergestellt ist.

## Revendications

1. Un procédé pour fournir un remplacement de repas à domicile comme défini ci-après, consistant à :
(i) fournir un plateau de transport pour chaque repas du remplacement de repas à domicile qui doit être servi,
(ii) placer le repas sur chaque plateau de transport et soumettre le repas à des conditions qui empêchent le développement de micro-organismes et la contamination du repas, le repas se composant d'un ou plusieurs aliments qui sont placés sur chaque plateau de transport suivant une disposition désirée pour simuler un repas gourmet,
(iii) congeler le repas sur chaque plateau de transport à une température qui permet au repas d'être entreposé au froid jusqu'à ce que le repas soit prêt à être servi,
(iv) fournir un plat de service pour chaque plateau de transport, ledit plat de service étant d'une dimension et d'une forme qui correspondent sensiblement à celles du plateau de transport,
(v) manipuler chaque plateau de transport de telle manière que le repas congelé soit transféré dans son plat de service respectif, le repas étant présenté dans son plat de service respectif de façon que le ou les aliments soient disposées dans les mêmes positions relatives que sur leur plateau de transport respectif, et à
(vi) chauffer ou décongeler le repas dans chaque plat de service à la température idoine pour le servir et le consommer.

2. Le procédé selon la revendication 1, dans lequel le plateau de transport est fabriqué en un matériau plastique flexible.
